(19) Europäisches Patentamt
European Patent Office
Office européen des brevets

(11) **EP 4 560 910 A1**

(12) **EUROPÄISCHE PATENTANMELDUNG**

(43) Veröffentlichungstag:
**28.05.2025  Patentblatt 2025/22**

(51) Internationale Patentklassifikation (IPC):
*H02M 7/483* (2007.01)   *H02M 1/32* (2007.01)
*H02M 7/757* (2006.01)   *H02M 7/493* (2007.01)
*H02P 3/22* (2006.01)   *H02H 9/04* (2006.01)

(21) Anmeldenummer: 23212001.4

(22) Anmeldetag: **24.11.2023**

(52) Gemeinsame Patentklassifikation (CPC):
**H02M 1/322; H02M 7/4835; H02M 7/7575;**
H02H 9/041; H02M 1/0095; H02M 7/493; H02P 3/22

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Innomotics GmbH**
**90441 Nürnberg (DE)**

(72) Erfinder: **Hofmann, Viktor**
**95448 Bayreuth (DE)**

(74) Vertreter: **Siemens Patent Attorneys**
**Postfach 22 16 34**
**80506 München (DE)**

(54) **AUFBAU UND STEUERVERFAHREN FÜR EINEN MODULAREN BREMSSTELLER MIT MINDESTENS ZWEI BREMSSTELLERZWEIGEN**

(57) Die Erfindung betrifft ein Verfahren zum Betreiben eines modularen Bremsstellers (1), wobei der modulare Bremssteller (1) mindestens zwei Bremsstellerzweige (15) aufweist, wobei die Bremsstellerzweige (15) jeweils mindestens ein Submodul (2) und einen Bremswiderstand (3) aufweisen, wobei die Bremsstellerzweige (15) in einer Parallelschaltung angeordnet sind, wobei mindestens zwei der Bremsstellerzweige (15) mittels des entsprechenden mindestens einen Submoduls (2) eine Spannung ($u_{BR}$) mit einem alternierenden Anteil ($u_{BR,aDC}$) erzeugen, wobei der alternierende Anteil ($u_{BR,aDC}$) der einzelnen Bremsstellerzweige (15) eine Phasenverschiebung von $\frac{2\pi}{n}$ zueinander aufweisen, wobei n der Anzahl der spannungserzeugenden Bremsstellerzweige (15) entspricht, wobei die Amplitude aller alternierenden Anteile ($u_{BR,aDC}$) gleich ist und derart bemessen ist, dass die im zeitlichen Mittel vom modularen Bremssteller (1) aufgenommene elektrische Energie im Bremswiderstand (3) in Wärme umgesetzt wird. Ferner betrifft die Erfindung ein Steuereinrichtung (10), eingerichtet zur Durchführung eines derartigen Verfahrens. Die Erfindung betrifft weiter einen modularen Bremssteller (1), mit einer derartigen Steuereinrichtung, sowie eine modulare Antriebseinheit (20), aufweisend einen modularen Multilevel-Stromrichter (21) und einen modularen derartigen Bremssteller (1).

**(Forts. nächste Seite)**

EP 4 560 910 A1

FIG 1

**Beschreibung**

Die Erfindung betrifft ein Verfahren zum Betreiben eines modularen Bremsstellers mit mindestens einem Submodul und einem Bremswiderstand. Weiter betrifft die Erfindung eine Steuereinrichtung sowie einen modularen Bremssteller, wobei der modulare Bremssteller mindestens ein Submodul und einen Bremswiderstand umfasst. Die Erfindung betrifft ferner eine modulare Antriebseinheit, aufweisend einen modularen Multilevel-Stromrichter und einen derartigen modularen Bremssteller, wobei der modulare Bremssteller mit einer Gleichspannungsseite des modularen Multilevel-Stromrichters elektrisch verbunden ist.

Ein modularer Multilevel-Stromrichter ist aus der DE 10 103 031 A1 bekannt. Dieser, auch als M2C oder MMC bekannte Stromrichter, besitzt eine Konverter-Topologie, die aufgrund des Aufbaus mit Submodulen insbesondere für Mittel- und Hochspannungsanwendungen geeignet ist. Der Grundaufbau des mehrphasigen Konverters umfasst zwei Konverterarme pro Phase, die jeweils eine Reihenschaltung von Submodulen aufweisen. Dabei sind die beiden Konverterarme am Phasenanschluss miteinander verbunden. Die andere Seite der Konverterarme ist mit der Gleichspannungsseite verbunden. Die Wechselspannungsseite des modularen Multilevel-Stromrichters wird durch einen oder mehrere Phasenanschlüsse gebildet. Im grundlegenden Aufbau kann mit dem Konverter Energie zwischen der Gleichspannungsseite und der Wechselspannungsseite bidirektional übertragen oder in einem gewissen Maß zwischengespeichert werden.

Um zusätzlich einen gezielten Energieabbau zu ermöglichen, ist die Installation eines Bremsstellers zweckmäßig. Ein modularer Bremssteller ist aus der WO 2007/023061 A2 bekannt. Der modulare Bremssteller wird üblicherweise an die Gleichspannungsseite des modularen Multilevel-Stromrichters beispielsweise zwischen einem DC+ und einem DC- Anschluss angeschlossen.

Der Widerstand einer Bremsstelleranordnung wird oftmals auch als Bremswiderstand bezeichnet, da dieser dazu geeignet ist, elektrische Energie einer elektrischen Maschine, die aufgrund eines Bremsvorgangs erzeugt wird, in Wärme umzuwandeln. Dabei ist die Verwendung eines Bremsstellers nicht auf die Anwendung eines bremsenden elektrischen Antriebs beschränkt. So muss es sich nicht notwendigerweise um Bremsenergie handeln, die in Wärme umgewandelt wird. Der Bremssteller kann beispielsweise auch zur Stabilisierung eines Energieversorgungsnetzes eingesetzt werden, indem er elektrische Energie aus dem Energieversorgungsnetz in Wärme umwandelt. Der Begriff Bremswiderstand wurde gewählt, um den Widerstand, in dem eine vorgegebene elektrische Energie bzw. Leistung in Wärme bzw. Wärme pro Zeit umgesetzt wird, von anderen Widerständen unterscheiden zu können.

Mit der Bezeichnung, eine in Wärme umzusetzende Leistung ist im Folgenden gemeint, dass das Integral der Leistung über die Zeit in Wärme umgesetzt wird. Mit anderen Worten wird eine sich aus der Leistung über die Zeit ergebende Energiemenge in Wärme umgesetzt.

Der Erfindung liegt die Aufgabe zugrunde, einen modularen Bremssteller zu verbessern.

Diese Aufgabe wird durch ein Verfahren zum Betreiben eines modularen Bremsstellers gelöst, wobei der modulare Bremssteller mindestens zwei Bremsstellerzweige aufweist, wobei die Bremsstellerzweige jeweils mindestens ein Submodul und einen Bremswiderstand aufweisen, die in einer Reihenschaltung angeordnet sind, wobei die Bremsstellerzweige zwischen zwei Anschlüssen des modularen Bremsstellers in einer Parallelschaltung angeordnet sind, wobei zumindest zeitweise mindestens zwei der Bremsstellerzweige mittels des entsprechenden mindestens einen Submoduls eine Spannung mit einem alternierenden Anteil erzeugen, wobei der alternierende Anteil gleichanteilsfrei ist, wobei der alternierende Anteil der einzelnen Bremsstellerzweige eine Phasenverschiebung von $\frac{2\pi}{n}$ zueinander aufweisen, wobei n der Anzahl der spannungserzeugenden Bremsstellerzweige entspricht, wobei die Amplitude aller alternierenden Anteile gleich ist und derart bemessen ist, dass die im zeitlichen Mittel vom modularen Bremssteller aufgenommene elektrische Energie im Bremswiderstand in Wärme umgesetzt wird. Ferner wird diese Aufgabe durch eine Steuereinrichtung gelöst, die zur Durchführung eines derartigen Verfahrens eingerichtet ist. Diese Aufgabe wird weiter durch einen modularen Bremssteller gelöst, wobei der modulare Bremssteller mindestens zwei Bremsstellerzweige aufweist, wobei die Bremsstellerzweige jeweils mindestens ein Submodul und einen Bremswiderstand aufweisen, die in einer Reihenschaltung angeordnet sind, wobei die Bremsstellerzweige zwischen zwei Anschlüssen des modularen Bremsstellers in einer Parallelschaltung angeordnet sind, wobei mittels des mindestens einen Submoduls der jeweiligen Bremsstellerzweige eine Spannung erzeugbar ist, wobei zur Steuerung oder Regelung des mindestens einen Submoduls der jeweiligen Bremsstellerzweige der modulare Bremssteller eine derartige Steuereinrichtung aufweist. Weiter wird diese Aufgabe durch eine modulare Antriebseinheit gelöst, die einen modularen Multilevel-Stromrichter und einen derartigen modularen Bremssteller aufweist, wobei der modulare Bremssteller mit einer Gleichspannungsseite des modularen Multilevel-Stromrichters elektrisch verbunden ist.

Weitere vorteilhafte Ausgestaltungen der Erfindung sind in den abhängigen Ansprüchen angegeben.

Der Erfindung liegt unter anderem die Erkenntnis zugrunde, dass sich durch den modularen Aufbau des modularen Bremsstellers jede Betriebsspannung des Bremsstellers realisieren lässt. Üblicherweise wird der modulare Bremssteller mit dem Zwischenkreis eines Stromrichters verbunden, um elektrische Energie aus einem Antriebssystem oder einem Energieversorgungssystem in Wärme umwandeln zu können. Mit dem modularen Aufbau lässt sich der modulare Bremssteller durch Verwendung einer entsprechenden Anzahl an Submodulen an beliebig hohe Zwischenkreisspannungen anpassen.

Dabei umfasst der Aufbau des Bremsstellers mindestens zwei Bremsstellerzweige, die zwischen den Anschlüssen des modularen Bremsstellers parallel angeordnet sind und jeweils eine Reihenschaltung von mindestens einem Submodul und einem Bremswiderstand aufweisen. Die Anzahl der Submodule kann vorzugsweise in jedem Bremsstellerzweig gleich gewählt werden. Dies vereinfacht die Regelung des Systems. Auch der der Wert des Widerstands kann für jeden Bremsstellerzweig gleich gewählt werden.

Als Submodule können dabei alle bereits bekannten Typen von Submodulen verwendet werden. Dazu zählen beispielsweise Halbbrückenmodule, Doppelhalbbrückenmodule oder auch Vollbrückenmodule. Zur Erzeugung von Spannungen kann allein die Kondensatorspannung oder die Kondensatorspannungen des entsprechenden Submoduls genutzt werden. Alternativ ist es auch möglich, beispielsweise durch Verwendung einer Pulsweitenmodulation auch eine Spannung durch das Submodul zu erzeugen, die kleiner ist als die Kondensatorspannung bzw. Kondensatorspannungen. Insbesondere bei der Verwendung nur eines Submoduls hat sich die Pulsweitenmodulation als vorteilhaft erwiesen, um unterschiedliche Spannungen zu erzeugen.

Darüber hinaus ermöglicht das Verfahren zum Betreiben des modularen Bremsstellers, die in Wärme umzuwandelnde Leistung genau zu steuern oder zu regeln. Die Wärme ergibt sich dann aus dem zeitlichen Integral der Leistung. Das Verfahren sieht vor, dass nicht die gesamte Zwischenkreisspannung bei der Energieumwandlung am Bremswiderstand abfällt. Der Vorteil liegt darin, die in Wärme umzuwandelnde Leistung regeln zu können. Gleichzeitig wird der Energieinhalt des Kondensators oder der Kondensatoren des mindestens einen Submoduls oder der Submodule geregelt. Damit ist ein stabiler Betrieb des modularen Bremsstellers auch über längere Betriebsdauern, insbesondere für einen kontinuierlichen Betrieb, möglich.

Der Bremswiderstand kann im Bremsstellerzweig an beliebiger Stelle in der Reihenschaltung angeordnet sein. Beispielsweise kann der Bremswiderstand zwischen einem der Anschlüsse des modularen Bremsstellers und einem Submodul oder an beliebiger Stelle zwischen zwei Submodulen angeordnet sein.

Für den Fall, dass der modulare Bremssteller nicht aktiv ist, also keine elektrische Energie in Wärme umsetzen soll, ist die über dem mindestens einen Submodul aller Bremsstellerzweige oder der weiteren Reihenschaltung von Submodulen anliegende Spannung identisch der Zwischenkreisspannung, so dass über dem Widerstand keine Spannung abfällt und damit auch kein Strom fließt. Es ist möglich, nur ein Teil, aber mindestens zwei, der Bremsstellerzweige mit der Umwandlung der elektrischen Energie in Wärme zu betreiben, während die übrigen Bremsstellerzeige im Leerlauf sind und die dortigen Submodule die Zwischenkreisspannung erzeugen und somit stromlos sind. Die an der Umwandlung von elektrischer Energie beteiligten Bremsstellerzweige erzeugen einen alternierenden Anteil und werden somit als spannungserzeugende Bremsstellerzweige bezeichnet.

Für die Steuerung oder Regelung wird eine Spannung über dem mindestens einen Submodul der spannungserzeugenden Bremsstellerzweige oder, falls mehrere Submodule in einer weiteren Reihenschaltung angeordnet sind, über der weiteren Reihenschaltung der Submodule erzeugt. Für die Steuerung oder Regelung der in Wärme umzuwandelnden Leistung wird hierfür ein Gleichanteil der Spannung vorgesehen. Dieser Gelichanteil erzeugt einen Strom mit weiteren Gleichanteil durch den modularen Bremssteller. Dabei ist es unerheblich, wie sich der weitere Gleichanteil auf die einzelnen spannungserzeugenden Bremsstellerzweige verteilt. Vorteilhaft im Sinne einer gleichmäßigen Ausnutzung der Bremsstellerzweige ist eine Gleichverteilung des weiteren Gleichanteils auf die spannungserzeugenden Bremsstellerzweige. Dazu ist der Gleichanteil der erzeugten Spannung in den spannungserzeugenden Bremsstellerzweigen gleich.

Dazu Für die Regelung der Kondensatorspannung oder der Kondensatorspannungen des oder der Submodule wird ein alternierender Anteil dem Gleichanteil überlagert.

Dabei wird in den spannungserzeugenden Bremsstellerzweigen jeweils ein alternierender Anteil erzeugt. Die Amplitude des alternierenden Anteils ist in den unterschiedlichen spannungserzeugenden Bremsstellerzweigen gleich. Die Phasenlage unterscheidet sich. Der alternierende Anteil der unterschiedlichen spannungserzeugenden Bremsstellerzweige weist einen Phasenunterschied von $\frac{2\pi}{n}$ zueinander auf. Dabei entspricht n der Anzahl der spannungserzeugenden Bremsstellerzweige. Dadurch ist gewährleistet, dass sich die entstehenden Wechselströme nur innerhalb des modularen Bremsstellers ausbilden. Eine Störung von am Bremssteller angeschlossenen Komponenten, wie beispielsweise einem Stromrichter oder einem Motor wird dadurch zuverlässig vermieden.

Besonders vorteilhaft ist es, den modularen Bremssteller mit dem modularen Multilevel-Stromrichter, auch als M2C Stromrichter bezeichnet, zu einer modularen Antriebseinheit zu kombinieren. Dabei können für den modularen Multilevel-Stromrichter als auch für den modularen Bremssteller baugleiche Submodule zum Einsatz kommen. Ebenso kann die gleiche Hardware für die Steuerung der Submodule verwendet werden. Durch den modularen Aufbau, sowohl von Stromrichter als auch vom modularen Bremssteller kann die modulare Antriebseinheit einfach an eine geforderte Leistungsanforderung durch die Wahl einer entsprechenden Anzahl von Submodulen im Stromrichter und im modularen Bremssteller angepasst werden. Durch die baugleiche Ausführung der Submodule in modularem Bremssteller und Multilevel-Stromrichter kann ein hoher Anteil an Gleichteilen erzielt werden. Dies wirkt sich positiv auf die Zuverlässigkeit und die Herstellkosten einer derartigen Antriebseinheit aus.

Der modulare Bremssteller kann an die Gleichspannungsseite von Stromrichtern mit beliebigem Aufbau angeschlossen werden und ist nicht auf die Anwendung mit einem modularen Multilevel-Stromrichter beschränkt.

Mit dem Gleichanteil der Spannung kann ein Strom durch den modularen Bremssteller erzeugt werden, der auch einen weiteren Gleichanteil aufweist. Dieser Gleichanteil fließt durch den modularen Bremssteller und somit auch den Bremswiderstand. Dabei erzeugt der durch den Bremswiderstand fließende Strom elektrische Verluste. Diese werden genutzt, um gezielt elektrische Energie in Wärme umzuwandeln. Die Höhe der in Wärme umzusetzenden Leistung, also Energie pro Zeiteinheit, kann durch die Höhe des Gleichanteils der Spannung gesteuert oder geregelt werden, da sich damit direkt die über dem Widerstand abfallende Spannung und daraus wiederum der weitere Gleichanteil des Stroms durch den modularen Bremssteller ergibt.

Die Zwischenkreisspannung liegt über dem modularen Bremssteller an, da dieser mit dem Zwischenkreis elektrisch verbunden ist. Damit liegt die Zwischenkreisspannung über der Reihenschaltung aus Bremswiderstand und der weiteren Reihenschaltung der Submodule an. Anstelle der weiteren Reihenschaltung von Submodulen kann alternativ auch nur ein Submodul vorhanden sein. Somit nimmt der modulare Bremssteller, an dem die Zwischenkreisspannung anliegt, die Wirkleistung

$$P_{BR} = U_D \cdot I_{BR,DC} = U_D \cdot n \cdot i_{BR,DC}$$

auf. Die gesamte vom Bremswiderstand aufgenommene Wirkleistung soll in Wärme umgesetzt werden, da der modulare Bremssteller nicht zur Aufnahme und Speicherung nennenswerter Energiebeträge ausgestaltet sein soll. Dabei entspricht n wieder der Anzahl der spannungserzeugenden Bremsstellerzweige.

Der alternierende Anteil der einzelnen spannungserzeugenden Bremsstellerzweige ist derart bemessen, dass die im zeitlichen Mittel vom modularen Bremssteller aufgenommene elektrische Energie im Bremswiderstand in Wärme umgesetzt wird. Der alternierende Anteil kann dazu genutzt werden, die Kondensatorspannungen der Submodule zu beeinflussen und den modularen Bremssteller zu stabilisieren. Der alternierende Anteil der Spannung bewirkt mittels eines entsprechenden Spannungsabfalls über dem Bremswiderstand der jeweiligen Bremsstellerzweige einen weiteren alternierenden Anteil im Strom im Innern des modularen Bremsstellers, der nicht über die Anschlüsse des modularen Bremsstellers fließt. Die erzeugten alternierenden Anteile zirkulieren lediglich innerhalb des modularen Bremsstellers und sind nach außen nicht sichtbar.

Dabei hat sowohl der alternierende Anteil als auch der weitere alternierende Anteil einen Mittelwert von null, so dass mit dem weiteren alternierenden Anteil des Stroms und der Zwischenkreisspannung bzw. der Spannung über dem modularen Bremssteller nur Blindleistung ausgetauscht wird. Der alternierende Anteil ist damit gleichanteilsfrei. Es hat sich in vorteilhafter Weise gezeigt, dass dieser Anteil dazu genutzt werden kann, Energie zwischen den Kondensatoren der Submodule und dem Widerstand auszutauschen. Dabei wird der Energieaustausch in vorteilhafter Weise so gesteuert oder geregelt, dass die gesamte Wirkleistung über dem Widerstand in Wärme umgesetzt wird. Dabei wird die im zeitlichen Mittel vom modularen Bremssteller aufgenommene elektrische Energie im Bremswiderstand in Wärme umgesetzt. Als Gleichung formuliert ergibt sich dabei der Zusammenhang

$$P_{BR} = U_D \cdot n \cdot i_{BR,DC} = n \cdot R \cdot i_{BR,eff}^2 \qquad ,$$

wobei der Strom $i_{BR}$ durch den Bremswiderstand des jeweiligen Bremsstellerzweigs sich aus dem Gleichanteil $i_{BR,DC}$ und dem alternierenden Anteil $i_{BR,aDC}$ gemäß

$$i_{BR} = i_{BR,DC} + i_{BR,aDC}$$

zusammensetzt. Daraus kann abhängig von der Spannungsform, die den Effektivwert beeinflusst, der alternierende Anteil bestimmt werden.

Als Bremswiderstände kommen vorzugsweise gewöhnliche Widerstände zum Einsatz, die eine hinreichend große parasitäre Induktivität aufweisen. Ist diese zu gering, können in den Bremsstellerzweige optional noch zusätzliche Induktivitäten in Serie zu den Submodulen bzw. Widerständen installiert werden. Über den modulierten Spannungsabfall an den parasitären und/oder eingebrachten Induktivitäten können Kreisströme gezielt eingeprägt und geregelt werden.

Die ein Gleichspannungsnetz oder Zwischenkreis eines Antriebssystems angeschlossenen Umrichter müssen, auch bei höheren Bremssteller-Leistung, bei Verwendung des vorgeschlagenen Verfahrens nicht gesondert für den Bremssteller-Betrieb ausgelegt oder funktional erweitert werden. Das bedeutet, dass bei üblichen Umrichtern, die in Kombination mit zellbasierten Bremschoppern genutzt werden, die Komponenten lediglich für einen stabilen Umrichterbetrieb dimensioniert und betrachtet werden müssen. Weiterhin wird mit dem vorgeschlagenem Verfahren und den entsprechenden Vorrichtungen auch ein Betrieb mit passiven Umrichtern, wie zum Beispiel Diodengleichrichtern, möglich. Dies ist bisher nicht möglich, da sich der Kreisstrom nicht über den Diodengleichrichter schließen kann. Es wird mit dem vorgeschlagenen Aufbau ein völlig autarker Bremssteller-Betrieb möglich, der auch als Schutzkomponente an beliebiger Stelle innerhalb eines Gleichspannungsnetzes oder einer Übertragungsstrecke installiert werden kann.

Bei einer vorteilhaften Ausgestaltung der Erfindung umfassen die Bremsstellerzweige jeweils eine Vielzahl von Submodulen umfassen, die in einer weiteren Reihenschaltung angeordnet sind, wobei mittels der Vielzahl von Submodulen die erzeugte Spannung über der weiteren Reihenschaltung der Submodule anliegt. Durch die Verwendung einer Vielzahl von Submodulen in der weiteren Reihenschaltung kann die Betriebsspannung des modularen Bremsstellers beliebig an die Zwischenkreisspannung des Stromrichters angepasst werden. Dabei sind beliebig hohe Betriebsspannungen, also Zwischenkreisspannungen in der Antriebseinheit, realisierbar.

Es hat sich dabei als vorteilhaft erwiesen, die Anzahl der Submodule in den einzelnen Bremsstellerzweigen gleich zu wählen. Dann ist die Steuerung und Regelung besonders einfach, da das Energiegleichgewicht insbesondere in Bezug auf die in den Kondensatoren der Submodule gespeicherte Energie besonders einfach erstellbar ist. Dies ermöglicht einen stabilen Betrieb des komplexen Aufbaus.

Bei einer weiteren vorteilhaften Ausgestaltung der Erfindung weist die erzeugte Spannung der spannungserzeugenden Bremsstellerzweige einen Gleichanteil auf, wobei der Gleichanteil in Abhängigkeit von der mittels des modularen Bremsstellers in Wärme umzuwandelnden Leistung oder in Abhängigkeit von der über der am modularen Bremssteller anliegenden Spannung gesteuert oder geregelt wird. Dabei wird die in Wärme umzuwandelnden Leistung oder die am modularen Bremssteller anliegenden Spannung beispielsweise mittels eines Sollwertes vorgegeben. Durch Vergleich des Sollwertes mit dem Istwert kann auf einfache Weise eine Regelung, beispielsweise mittels eines PI-Reglers durchgeführt werden. Somit hat es sich als vorteilhaft erwiesen, den Gleichanteil in Abhängigkeit von der in Wärme umzuwandelnden Leistung zu steuern oder zu regeln. Dabei kann diese Leistung wieder von anderen Größen abhängen wie beispielsweise der Spannung des Kondensators der Submodule eines modularen Multilevel-Stromrichters. Falls der modulare Bremssteller an einem Zwischenkreis mit Zwischenkreiskondensator betrieben wird, beispielsweise an einem 2-Punkt- oder 3-Punkt-Stromrichter, hat es sich als vorteilhaft erwiesen, den Gleichanteil in Abhängigkeit von der Zwischenkreisspannung zu steuern oder zu regeln. Mit diesen Regelungsstrukturen lassen sich dynamische Regelungen zur Umwandlung von elektrischer Leistung in Wärme realisieren, die die elektrische Antriebseinheit vor Überlastung durch zu hohe Energiemengen schützen. Diese Energiemengen können sich beispielsweise aus dem Bremsvorgang einer elektrischen Maschine ergeben.

Es hat sich dabei als vorteilhaft erwiesen, die Gleichanteile aller spannungserzeugenden Bremsstellerzweige in gleicher Höhe zu erzeugen. Dann teilt sich auch der weitere Gleichanteil des Stroms gleichmäßig auf die einzelnen spannungserzeugenden Bremsstellerzweige auf. Dies führt zu einer gleichmäßigen Belastung der einzelnen Bremstellerzweige und somit auch zu einer gleichmäßigen Alterung. Dies führt zu einer hohen Lebensdauer des modularen Bremsstellers.

Bei einer weiteren vorteilhaften Ausgestaltung der Erfindung wird der Gleichanteil derart gesteuert oder geregelt, Ströme mit einem weiteren Gleichanteil durch den modularen Bremssteller zu erzeugen, wobei das Produkt aus dem weiteren Gleichanteil aller spannungserzeugenden Bremsstellerzweige und der Spannung über dem modularen Bremssteller einer vorgegebenen, durch den modularen Bremssteller in Wärme umzuwandelnden Leistung, insbesondere einer vorgegebenen, durch den modularen Bremssteller in Wärme umzuwandelnden Wirkleistung, entspricht. Der Gleichanteil der Spannung wird dabei in der Spannungshöhe so gesteuert oder geregelt, dass der weitere Gleichanteil des Stroms so groß ist, dass das Produkt aus der Zwischenkreisspannung und dem weiteren Gleichanteil aller Bremsstellerzweige dem Wert, der durch den modularen Bremssteller in Wärme umzuwandelnden Leistung entspricht. Bei der in Wärme umzuwandelnden Leistung handelt es sich um eine Energie, die in einer bestimmten Zeit in Wärme umgewandelt wird. Alternativ ist es möglich, auch eine Wirkleistung als in Wärme umzuwandelnden Leistung festzulegen.

Bei einer weiteren vorteilhaften Ausgestaltung der Erfindung wird der alternierende Anteil als Stellgröße einer Regelung der Kondensatorspannungen der Submodule verwendet. Um Störungen ausregeln zu können, hat es sich als positiv erwiesen, die nach den Formeln ermittelten Werte des alternierenden Anteils für eine Vorsteuerung zu verwenden. Die Spannung an den Kondensatoren wird dann mittels einer Regelung geregelt. Damit kann der modulare Bremssteller auch bei Vorliegen von Störgrößen stabil betrieben werden. Des Weiteren ist der Betrieb unabhängig von sich ändernden Größen. Beispielsweise eine durch Alterung oder Erwärmung hervorgerufene Änderung des Widerstandswertes kann durch die Regelung problemlos ausgeglichen werden.

Bei einer weiteren vorteilhaften Ausgestaltung der Erfindung ist eine Wechselspannungsseite des modularen Multilevel-Stromrichters mit einer Energiequelle, insbesondere mit einem Energieversorgungsnetz oder mit einer elektrischen Maschine, verbunden. Der modulare Bremssteller kann durch die Verbindung mit einer Energiequelle dazu genutzt werden, überschüssige oder nicht nutzbare Energie in Wärme umzuwandeln. Bei der Energiequelle kann es sich beispielsweise um eine elektrische Maschine handeln, die bei einem Abbremsvorgang elektrische Energie zurückspeist. Wenn diese nicht weiter genutzt werden kann, muss diese mittels des modularen Bremsstellers in Wärme umgewandelt werden, wenn auf eine mechanische Bremse verzichtet werden soll. Die Umwandlung der elektrischen Energie in Wärme erfolgt im Gegensatz zu einer mechanischen Bremse verschleißfrei, so dass der Einsatz des modularen Bremsstellers im Betrieb wirtschaftlicher ist.

Ebenso ist es möglich, den modularen Multilevel-Stromrichter für die Energieübertragung zu nutzen. In diesem Fall kann es sinnvoll sein, für den Fall, dass die übertragene Energie nicht abgenommen werden kann, einen modularen Bremssteller vorzusehen. Dieser gewährleistet, dass eine derartige Energieübertragung auch dann im Betrieb bleibt, wenn die Entgegennahme von Energie gestört ist. Das Energieübertragungssystem kann während dieser Störung im Betrieb bleiben und ein aufwendiges neues Abschalten und Anfahren, das auch zu Stabilitätsproblemen im Energieversorgungsnetz führen kann, zuverlässig vermeiden. Somit steigert der modulare Bremssteller auch die Zuverlässigkeit und Verfügbarkeit einer modularen Antriebseinheit, die für die Energieübertragung vorgesehen ist.

Bei einer weiteren vorteilhaften Ausgestaltung der Erfindung ist die Steuereinrichtung der modularen Antriebseinheit dazu eingerichtet, die in Wärme umzuwandelnde Leistung in Abhängigkeit von der Spannung des Kondensators der Submodule des modularen Multilevel-Stromrichters zu ermitteln. Bei einem modularen Multilevel-Stromrichter zeigt sich eine im Stromrichter gespeicherte Energie nicht zwangsweise wie beispielsweise bei einem 2-Punkt- oder 3-Punkt-Stromrichter an der Zwischenkreisspannung. Bei dem modularen Multilevel-Stromrichter wirkt sich ein erhöhter Energieinhalt auf die gespeicherte Energie, also die Spannung, des Kondensators oder der Kondensatoren in den jeweiligen Submodulen des modularen Multilevel-Stromrichters aus. Um den Energieinhalt im modularen Multilevel-Stromrichter gezielt zu reduzieren, hat es sich als vorteilhaft erwiesen, die für die Steuerung oder Regelung des Gleichanteils in Wärme umzusetzende Leistung in Abhängigkeit von der Spannung des Kondensators der jeweiligen Submodule des modularen Multilevel-Stromrichters zu ermitteln. Ein mögliches Verfahren zum Betreiben einer elektrischen Antriebseinheit mit einem modularen Stromrichter und einem vorgeschlagenen modularen Bremssteller regelt oder steuert den Gleichanteil der Spannung über der weiteren Reihenschaltung der Submodule des modularen Bremsstellers in Abhängigkeit von der Spannung des Kondensators oder der Kondensatoren der Submodule des modularen Multilevel-Stromrichters.

Im Folgenden wird die Erfindung anhand der in den Figuren dargestellten Ausführungsbeispiele näher be-schrieben und erläutert. Es zeigen:

FIG 1 einen modularen Bremssteller,
FIG 2 bis FIG 4 Ausführungsbeispiele für das Submodul,
FIG 5 Zeitverläufe von Spannung und Strom,
FIG 6 bis FIG 8 Ausführungsbeispiele der modularen Antriebseinheit.

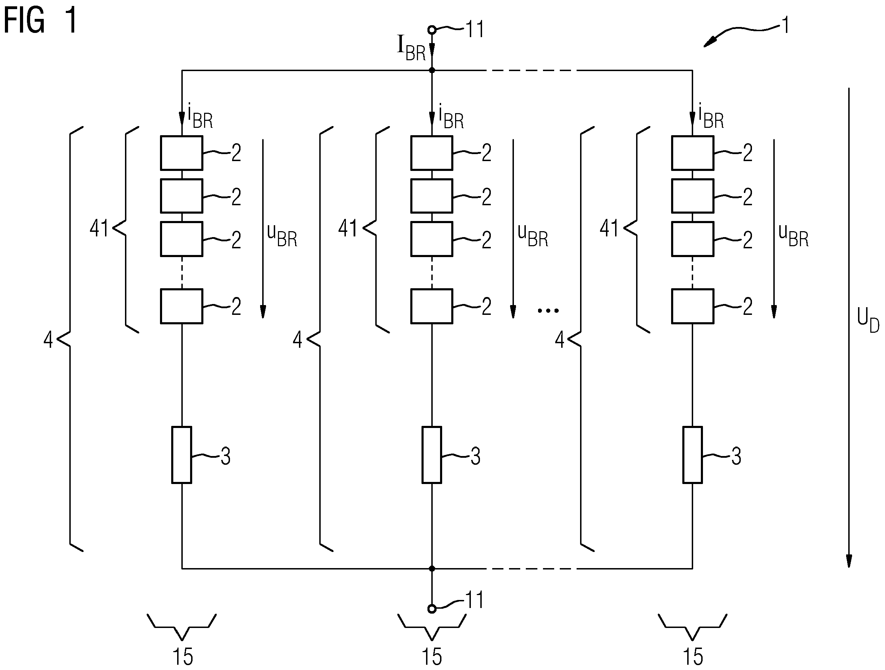

Die FIG 1 zeigt einen modularen Bremssteller 1. Dieser weist eine Vielzahl von Bremsstellerzweigen 15, die parallel zwischen Anschlüssen 11 des modularen Bremsstellers 1 angeordnet sind. Die Bremsstellerzweige 15 weisen jeweils eine Reihenschaltung 4 von mindestens einem Submodul 2 und einem Bremswiderstand 3 auf. Die Reihenschaltung 4 kann eine Vielzahl von Submodulen 2 aufweisen. Diese sind wiederum als Teil der Reihenschaltung 4 in einer weiteren Reihenschaltung 41 angeordnet. Der modulare Bremssteller 1 ist dazu eingerichtet, an seinen Anschlüssen 11 mit einem Zwischenkreis 9 eines Stromrichters verbunden zu werden.

Über der weiteren Reihenschaltung 41 der Submodule 2 lässt sich mit Hilfe einer Steuereinrichtung 10 eine Spannung $u_{BR}$ erzeugen. Mit der erzeugten Spannung $u_{BR}$ lässt sich ein Strom $i_{BR}$ durch den modularen Bremssteller 1 bewirken. Der Strom $i_{BR}$ fließt auch durch den jeweiligen Bremswiderstand 3 und bewirkt die Umwandlung von elektrischer Energie in Wärme. An den Anschlüssen 11 summieren sich die Ströme $i_{BR}$ zu einem Gesamtstrom $I_{BR}$. Vorzugsweise werden die Ströme $i_{BR}$ derart geregelt, dass diese bis auf die Phasenlage gleich sind.

Über dem modularen Bremssteller 1 liegt die Betriebsspannung $U_D$ an. Wird der modulare Bremssteller 1 mit dem Zwischenkreis eines Stromrichters verbunden, so liegt an dem modularen Bremssteller die Zwischenkreisspannung an. In diesem Fall spricht man davon, dass der modulare Bremssteller 1 mit der Gleichspannungsseite des Stromrichters verbunden ist.

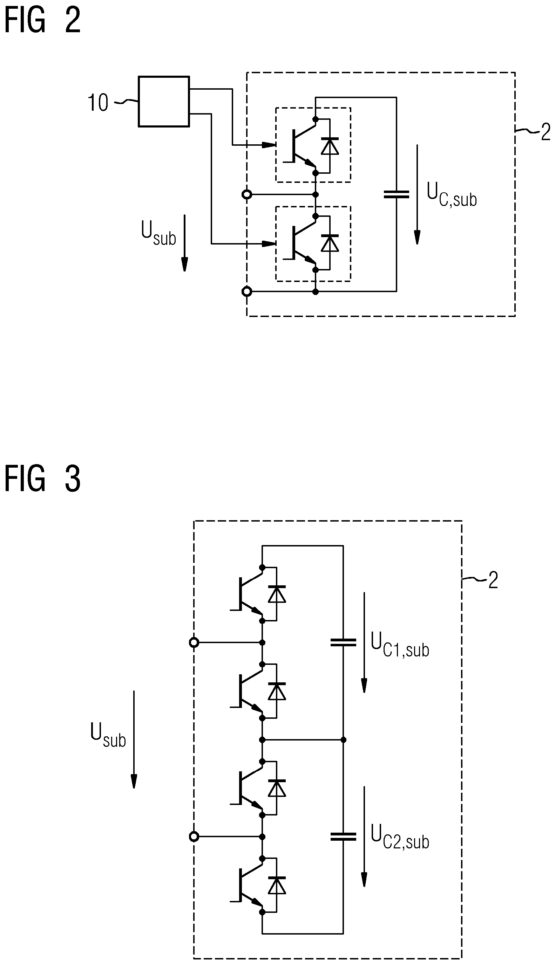

Die Figuren 2 bis 4 zeigen Ausführungsbeispiele von Submodulen 2. Alle bekannten Submodule 2, insbesondere die Submodule 2 der Figuren 2 bis 4 sind für die Durchführung des vorgeschlagenen Verfahrens geeignet. Zur Vermeidung von Wiederholungen wird auf die Beschreibung zur FIG 1 und die dort eingeführten Bezugzeichen verwiesen.

Die dargestellten Ausführungsbeispiele der Submodule 2 umfassen mindestens zwei Halbleiterschalter und mindestens einen Kondensator. Durch Schalthandlungen der Halbleiter-schalter kann eine Ausgangsspannung $U_{sub}$ an den Anschlüssen des Submoduls 2 erzeugt werden. Dabei übermittelt eine Steuereinrichtung 10 die Ansteuersignale an die Halbleiterschalter des Submoduls 2. Die Steuereinrichtung 10 ist vorzugsweise außerhalb des Submoduls 2 angeordnet und somit nicht Teil des Submoduls 2. Vielmehr hat es sich als vorteilhaft erwiesen, mit einer Steuereinrichtung 10 alle Submodule 2 des modularen Bremsstellers 1 anzusteuern. Darüber hinaus kann die Steuereinrichtung 10 die für die Steuerung und Regelung der Spannungen und Ströme erforderlichen Berechnungen vornehmen. So kann die Steuereinrichtung 10 aus dem vorgegebenen Wert der in Wärme umzuwandelnden Leistung den erforderlichen Strom $i_{BR}$ durch den modularen Bremssteller 1 bestimmen. Um diesen Strom $i_{BR}$ zu erzeugen, wird durch entsprechende Ansteuersignale eine durch die Steuereinrichtung 10 ermittelte, gesteuerte oder geregelte Spannung über den Submodulen 2 der weiteren Reihenschaltung 41 erzeugt. In den folgenden Ausführungsbeispielen wurde auf die Darstellung der Steuereinrichtung 10 aus Gründen der Übersichtlichkeit verzichtet.

Die FIG 2 zeigt ein sogenanntes Halbbrückenmodul. Dies weist zwei Halbleiterschalter und einen Kondensator auf. An dem Kondensator liegt die Spannung $U_{C,sub}$ an. Durch Schalthandlungen der Halbleiterschalter kann die Ausgangsspannung $U_{sub}$ von null oder $U_{C,sub}$ an den Anschlüssen des Submoduls 2 erzeugt werden.

Die FIG 3 zeigt ein sogenanntes Doppelbrückenmodul. Dies weist vier Halbleiterschalter und zwei Kondensatoren auf. An den Kondensatoren liegt jeweils die Spannung $U_{C1,sub}$ bzw. $U_{C2,sub}$ an. Durch Schalthandlungen der Halbleiterschalter kann die Ausgangsspannung $U_{sub}$ von null, einer der Kondensatorspannungen $U_{C1,sub}$, $U_{C2,sub}$ oder der Summe der Kondensatorspannungen $U_{C1,sub}$, $U_{C2,sub}$ an den Anschlüssen des Submoduls 2 erzeugt werden.

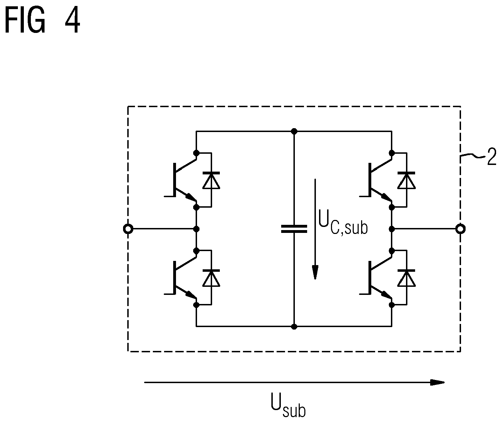

Die FIG 4 zeigt ein sogenanntes Vollbrückenmodul. Dies weist vier Halbleiterschalter und einen Kondensator auf. An dem Kondensator liegt die Spannung $U_{C,sub}$ an. Durch Schalthandlungen der Halbleiterschalter kann die Ausgangsspannung $U_{sub}$ von null, der positiven oder der negativen Kondensatorspannung $\pm U_{C,sub}$ an den Anschlüssen des Submoduls 2 erzeugt werden.

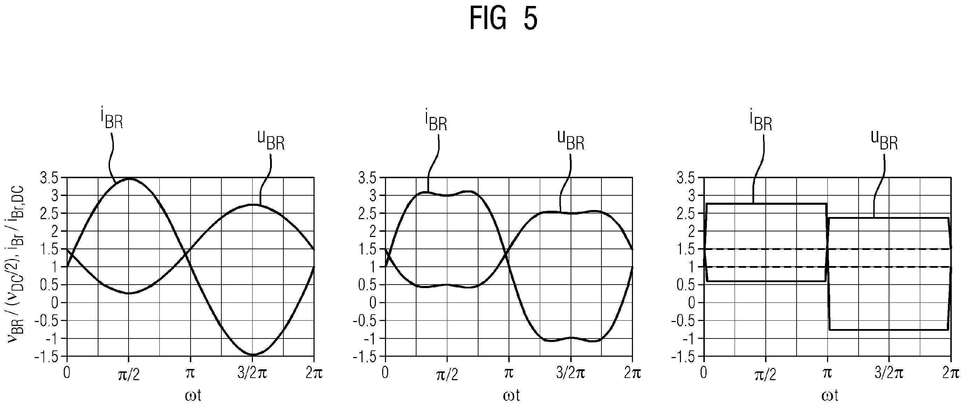

Die FIG 5 zeigt eine Auswahl möglicher Zeitverläufe für die über der weiteren Reihenschaltung erzeugten Spannungen $u_{BR}$ und den durch den modularen Bremssteller 1 fließenden Strom $i_{BR}$. Der alternierende Anteil $u_{BR,aDC}$ kann dabei sinusförmig sein. Alternativ kann der alternierende Anteil $u_{BR,aD}$ auch aus der Überlagerung zweier Sinusfunktionen mit unterschiedlicher Frequenz gewonnen werden. Als weitere Alternative können die Spannungsform und die Stromform des alternierenden Anteils $u_{BR,aDC}$ blockförmig oder trapezförmig ausgebildet sein. Alle diese Ausgestaltungen können zur Steuerung oder Regelung des modularen Bremsstellers genutzt werden.

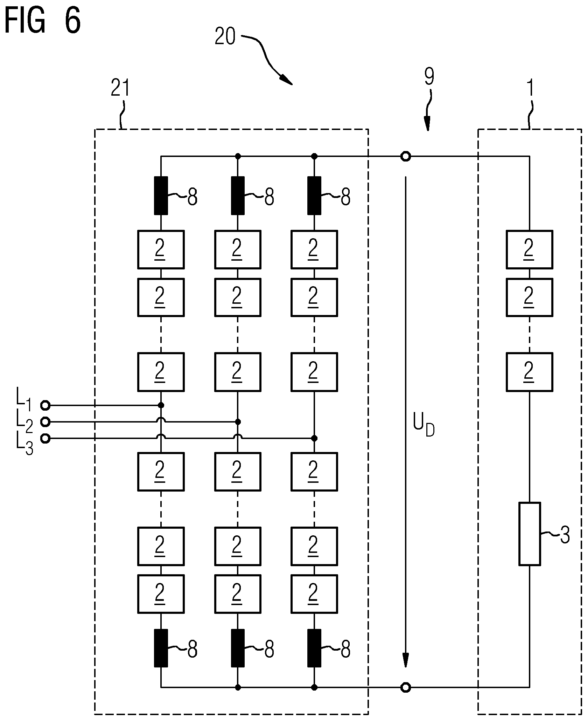

Die FIG 6 zeigt eine modulare Antriebseinheit 20 mit einem modularen Multilevel-Stromrichter 21 und einem modularen Bremssteller 1. Diese sind über den Zwischenkreis 9, an dem die Spannung UD anliegt, miteinander verbunden. Dabei kann, nicht notwendigerweise, der modulare Multilevel-Stromrichter 21 die gleichen Submodule 2 aufweisen wie der modulare Bremssteller 1. Die Reihenschaltung der Submodule 2 des modularen Multilevel-Stromrichters 21 weist darüber hinaus noch eine Induktivität 8 auf, die das Regelverhalten des modularen Multilevel-Stromrichters 21 verbessert. Die Anschlüsse L1, L2, L3 stellen die wechselspannungsseitigen Anschlüsse oder kurz die Wechselspannungsseite des modularen Multilevel-Stromrichters 21 dar. In diesem Ausführungsbeispiel ist der modulare Multilevel-Stromrichter 21 dreiphasig ausgeführt. Alternativ ist auch eine einphasige Ausführung mit Neutralleiter oder auch jede beliebige Phasenanzahl möglich, indem entsprechend viele Phasenmodule im modularen Multilevel-Stromrichter 21 vorgesehen wer-den.

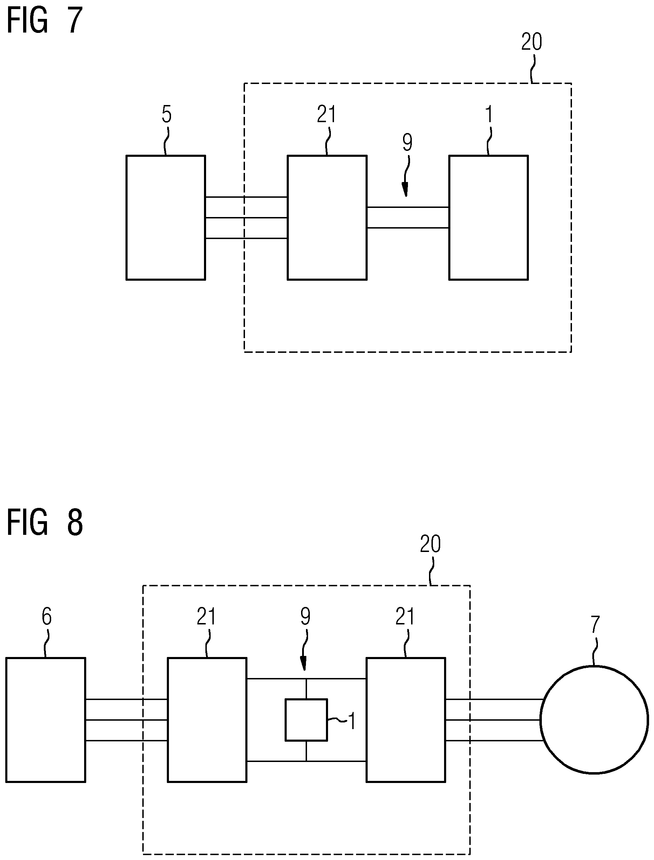

In der FIG 7 ist ein Ausführungsbeispiel einer modularen Antriebseinheit 20 dargestellt. Dabei ist eine Energiequelle 5 mit der Wechselspannungsseite des modularen Multilevel-Stromrichters 21 elektrisch verbunden. Bei der Energiequelle kann es sich beispielsweise um ein Energieversorgungsnetz 6 oder eine elektrische Maschine 7 handeln.

Im Ausführungsbeispiel der FIG 8 weist die modulare Antriebseinheit 20 zwei modulare Multilevel-Stromrichter 21 und einen modularen Bremssteller 1 auf, die am Zwischenkreis 9 miteinander elektrisch verbunden sind. Dabei ist ein erster der zwei modularen Multilevel-Stromrichter 21 an seiner Wechselspannungsseite mit einem Energieversorgungsnetz 6 und ein zweiter der zwei modularen Multilevel-Stromrichter 21 an seiner Wechselspannungsseite mit einer elektrischen Maschine 7 verbunden. Die elektrische Maschine 7 kann dabei aus dem Energieversorgungsnetz 6 mit elektrischer Energie versorgt werden. Auch eine Rückspeisung von Energie von der elektrischen Maschine 7 in das Energieversorgungsnetz 6 beispielsweise bei einem Brems-vorgang ist mit der modularen Antriebseinheit 20 möglich. Falls das Energieversorgungsnetz 6 nicht aufnahmefähig ist, kann die durch die elektrische Maschine 7 gewonnene elektrische Energie mittels des modularen Bremsstellers 1 in vorteilhafter Weise in Wärme umgewandelt werden. Auf eine verschleißbehaftete mechanische Bremse kann in dieser Ausgestaltung verzichtet werden.

**Patentansprüche**

1. Verfahren zum Betreiben eines modularen Bremsstellers (1), wobei der modulare Bremssteller (1) mindestens zwei Bremsstellerzweige (15) aufweist, wobei die Bremsstellerzweige (15) jeweils mindestens ein Submodul (2) und einen Bremswiderstand (3) aufweisen, die in einer Reihenschaltung (4) angeordnet sind, wobei die Bremsstellerzweige (15) zwischen zwei Anschlüssen (11) des modularen Bremsstellers (1) in einer Parallelschaltung angeordnet sind, wobei zumindest zeitweise mindestens zwei der Bremsstellerzweige (15) mittels des entsprechenden mindestens einen Submoduls (2) eine Spannung ($u_{BR}$) mit einem alternierenden Anteil ($u_{BR,aDC}$) erzeugen, wobei der alternierende Anteil ($u_{BR,aDC}$) gleichanteilsfrei ist, wobei der alternierende Anteil ($u_{BR,aDC}$) der einzelnen Bremsstellerzweige (15) eine Phasenverschiebung von $\frac{2\pi}{n}$ zueinander aufweisen, wobei n der Anzahl der spannungserzeugenden Bremsstellerzweige (15) entspricht, wobei die Amplitude aller alternierenden Anteile ($u_{BR,aDC}$) gleich ist und derart bemessen ist, dass die im zeitlichen Mittel vom modularen Bremssteller (1) aufgenommene elektrische Energie im Bremswiderstand (3) in Wärme umgesetzt wird.

2. Verfahren nach Anspruch 1, wobei die Bremsstellerzweige (15) jeweils eine Vielzahl von Submodulen (2) umfassen, die in einer weiteren Reihenschaltung (41) angeordnet sind, wobei mittels der Vielzahl von Submodulen (2) die erzeugte Spannung ($u_{BR}$) über der weiteren Reihenschaltung (41) der Submodule (2) anliegt.

3. Verfahren nach einem der Ansprüche 1 oder 2, wobei die erzeugte Spannung ($u_{BR}$) der spannungserzeugenden Bremsstellerzweige (15) einen Gleichanteil ($u_{BR,DC}$) aufweist, wobei der Gleichanteil ($u_{BR,DC}$) in Abhängigkeit von der mittels des modularen Bremsstellers (1) in Wärme umzuwandelnden Leistung oder in Abhängigkeit von der über der am modularen Bremssteller (1) anliegenden Spannung ($U_D$) gesteuert oder geregelt wird.

4. Verfahren nach Anspruch 3, wobei der Gleichanteil ($u_{BR,DC}$) derart gesteuert oder geregelt wird, Ströme ($i_{BR}$) mit einem weiteren Gleichanteil ($i_{BR,DC}$) durch den modularen Bremssteller (1) zu erzeugen, wobei das Produkt aus dem weiteren Gleichanteil ($i_{BR,DC}$) aller spannungserzeugenden Bremsstellerzweige (15) und der Spannung ($U_D$) über dem modularen Bremssteller (1) einer vorgegebenen, durch den modularen Bremssteller (1) in Wärme umzuwandelnden Leistung, insbesondere einer vorgegebenen, durch den modularen Bremssteller (1) in Wärme umzuwandelnden Wirkleistung, entspricht.

5. Verfahren nach einem der Ansprüche 1 bis 4, wobei der alternierende Anteil ($u_{BR,aDC}$) als Stellgröße einer Regelung der Kondensatorspannungen ($U_{C,sub}$) der Submodule (2) verwendet wird.

6. Steuereinrichtung (10), eingerichtet zur Durchführung eines Verfahrens nach einem der Ansprüche 1 bis 5.

7. Modularer Bremssteller (1), wobei der modulare Bremssteller (1) mindestens zwei Bremsstellerzweige (15) aufweist, wobei die Bremsstellerzweige (15) jeweils mindestens ein Submodul (2) und einen Bremswiderstand (3) aufweisen, die in einer Reihenschaltung (4) angeordnet sind, wobei die Bremsstellerzweige (15) zwischen zwei Anschlüssen (11) des modularen Bremsstellers (1) in einer Parallelschaltung angeordnet sind, wobei mittels des mindestens einen Submoduls (2) der jeweiligen Bremsstellerzweige (15) eine Spannung ($u_{BR}$) erzeugbar ist, wobei zur Steuerung oder Regelung des mindestens einen Submoduls (2) der jeweiligen Bremsstellerzweige (15) der modulare Bremssteller (1) eine Steuereinrichtung (10) nach Anspruch 6 aufweist.

8. Modularer Bremssteller (1) nach Anspruch 7, wobei die Bremsstellerzweige (15) eine Vielzahl von Submodulen (2) umfassen, die in einer weiteren Reihenschaltung (41) angeordnet sind, wobei mittels der Vielzahl von Submodulen (2) eine erzeugte Spannung ($u_{BR}$) über der weiteren Reihenschaltung (41) anliegt.

9. Modulare Antriebseinheit (20), aufweisend einen modularen Multilevel-Stromrichter (21) und einen modularen Bremssteller (1) nach einem der Ansprüche 7 oder 8, wobei der modulare Bremssteller (1) mit einer Gleichspannungsseite des modularen Multilevel-Stromrichters (21) elektrisch verbunden ist.

10. Modulare Antriebseinheit (20) nach Anspruch 9, wobei eine Wechselspannungsseite des modularen Multilevel-Stromrichters (21) mit einer Energiequelle (5), insbesondere mit einem Energieversorgungsnetz (6) oder mit einer elektrischen Maschine (7), verbunden ist.

11. Modulare Antriebseinheit (20) nach einem der Ansprüche 9 oder 10, wobei die Steuereinrichtung (10) eingerichtet ist, die in Wärme umzuwandelnde Leistung in Abhängigkeit von der Spannung des Kondensators der Submodule des modularen Multilevel-Stromrichters (21) zu ermitteln.

FIG 1

EP 4 560 910 A1

# FIG 2

# FIG 3

# FIG 4

$U_{sub}$

# FIG 5

EP 4 560 910 A1

FIG 6

$U_D$

$L_1$
$L_2$
$L_3$

FIG 7

FIG 8

Europäisches
Patentamt

European
Patent Office

Office européen
des brevets

## EUROPÄISCHER RECHERCHENBERICHT

Nummer der Anmeldung

EP 23 21 2001

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | LI ZHENGXUAN ET AL: "Energy Diverting Converter Topology Using Unidirectional Current H-Bridge Submodules for VSC-HVDC Transmission System", IEEE TRANSACTIONS ON POWER ELECTRONICS, INSTITUTE OF ELECTRICAL AND ELECTRONICS ENGINEERS, USA, Bd. 37, Nr. 5, 9. Dezember 2021 (2021-12-09), Seiten 5299-5308, XP011898442, ISSN: 0885-8993, DOI: 10.1109/TPEL.2021.3133498 [gefunden am 2022-01-19] * Seite 5302; Abbildungen 1(d),3,4,5, 10 * ----- | 1-11 | INV. H02M7/483 H02M1/32 H02M7/757 H02M7/493 H02P3/22 H02H9/04 |
| Y | BIRKEL ANDRE ET AL: "Analysis and semiconductor based comparison of energy diverting converter topologies for HVDC transmission systems", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8. September 2015 (2015-09-08), Seiten 1-10, XP032800044, DOI: 10.1109/EPE.2015.7309087 [gefunden am 2015-10-27] * Seite 3 – Seite 4; Abbildungen 1(c), 1(d) * ----- | 1-11 | RECHERCHIERTE SACHGEBIETE (IPC) H02M H02H H02P B60L |
| Y | US 7 949 443 B2 (TOSHIBA KK [JP]) 24. Mai 2011 (2011-05-24) * Spalte 3 – Spalte 5; Abbildungen 1, 3A – 3C * ----- | 1-11 | |

Der vorliegende Recherchenbericht wurde für alle Patentansprüche erstellt

| Recherchenort | Abschlußdatum der Recherche | Prüfer |
|---|---|---|
| Den Haag | 26. April 2024 | Zeljkovic, Sandra |

## ANHANG ZUM EUROPÄISCHEN RECHERCHENBERICHT
## ÜBER DIE EUROPÄISCHE PATENTANMELDUNG NR.

EP 23 21 2001

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2024

| Im Recherchenbericht angeführtes Patentdokument | Datum der Veröffentlichung | Mitglied(er) der Patentfamilie | Datum der Veröffentlichung |
|---|---|---|---|
| US 7949443 B2 | 24-05-2011 | CN 101959708 A | 26-01-2011 |
| | | EP 2251224 A1 | 17-11-2010 |
| | | JP 4643670 B2 | 02-03-2011 |
| | | JP 2009219208 A | 24-09-2009 |
| | | US 2010332065 A1 | 30-12-2010 |
| | | WO 2009110479 A1 | 11-09-2009 |
| | | ZA 201006411 B | 25-05-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1

- WO 2007023061 A2